# EUROPEAN PATENT APPLICATION

(11) **EP 3 045 289 A1**
(43) Date of publication of application: **20.07.2016**
(21) Application number: 14844113.2
(22) Date of filing: 09.09.2014
(51) Int. Cl.: B29C 47/06, B29C 47/90, B29K 105/04, B29L 9/00

(54) **PROCESS AND DEVICE FOR PRODUCING RESIN LAMINATE**

(30) Priority: 12.09.2013 JP 2013189431
(71) Applicant: Sekisui Chemical Co., Ltd., Osaka-shi, Osaka 530-8565 (JP)
(72) Inventor: TSUMURA, Kensuke, Mishima-gun Osaka 618-0021 (JP); HATADA, Ryouji, Kyoto-city, Kyoto 601-8105 (JP); WADA, Atsushi, Mishima-gun Osaka 618-0021 (JP); INUI, Nobuhiko, Mishima-gun Osaka 618-0021 (JP)
(74) Representative: Ter Meer Steinmeister & Partner
(86) International application number: PCT/JP2014/073759
(87) International publication number: WO 2015/037572

(57) **Abstract**

There is provided a method for manufacturing a resin laminate in which a resin laminate having a foamed resin layer and a non-foamed resin layer can be efficiently manufactured, and a resin laminate having good surface properties can be obtained. A method for manufacturing a resin laminate 14A formed by laminating a foamed resin layer 6B and non-foamed resin layers 7A and 7A and having at least one foamed resin layer 6B, comprising steps of feeding a foamable resin composition 6 in an unfoamed state in a molten state and non-foaming resin compositions 7 and 7 for forming the non-foamed resin layers 7A and 7A into a mold 3 for sheet molding to form a resin laminate; and feeding the above resin laminate in which the foamable resin composition 6 is in an unfoamed state or a foamed state to a sizing die 4.

## Description

### Technical Field

The present invention relates to a method for manufacturing a resin laminate comprising a foamed resin layer and particularly to a method and apparatus for manufacturing a resin laminate in which at least one foamed resin layer is laminated on a non-foamed resin layer.

### Background Art

Conventionally, in order to obtain cushioning properties or in order to promote weight reduction, resin foams are widely used. The following Patent Literature 1 discloses one example of a method for manufacturing such a resin foam. In Patent Literature 1, a foamable resin composition containing a thermoplastic resin and a foaming agent is extruded and molded from a mold. Here, the foaming agent is decomposed by heating in the mold. Therefore, bubbles produced by the decomposition of the foaming agent are formed.

The following Patent Literature 2 also similarly discloses a method for extrusion-molding a foamable resin composition containing a thermoplastic resin composition and a foaming agent.

### Citation List

### Patent Literature

Patent Literature 1: Japanese Patent Laid-Open No. 8-11190
Patent Literature 2: Japanese Patent Laid-Open No. 2004-237729

### Summary of Invention

### Technical Problem

In both the manufacturing methods described in Patent Literature 1 and Patent Literature 2, a resin foam is obtained by extrusion molding. However, in such methods, only a resin sheet comprising a single foamed resin layer is obtained.

Therefore, in order to enhance mechanical strength and improve surface properties, another resin layer must be further laminated on the surface of the obtained resin foam. But, when another resin layer is laminated on the surface of the resin foam obtained by extrusion molding, an adhesion layer must be provided between them. Alternatively, another resin layer whose surface is melted or softened must be laminated on the resin foam. Therefore, there are the problems of complicated steps and high cost.

It is an object of the present invention to provide a method for manufacturing a resin laminate in which a resin laminate having a foamed resin layer and a non-foamed resin layer can be efficiently manufactured, and a resin laminate having good surface properties can be obtained, and an apparatus for manufacturing a resin laminate that enables the method for manufacturing a resin laminate.

### Solution to Problem

A method for manufacturing a resin laminate according to the present invention is a method for manufacturing a resin laminate formed by laminating a foamed resin layer and a non-foamed resin layer and having at least one foamed resin layer, comprising steps of feeding a foamable resin composition in an unfoamed state in a molten state and a non-foaming resin composition for forming the non-foamed resin layer into a mold for sheet molding to form a resin laminate; and feeding the resin laminate in which the foamable resin composition is in an unfoamed state or a foamed state to a sizing die.

In a particular aspect of the method for manufacturing a resin laminate according to the present invention, in the step of feeding into the mold for sheet molding to form the resin laminate, the resin laminate in which the foamable resin composition is in an unfoamed state is formed, and in the step of feeding to the sizing die, the resin laminate in which the foamable resin composition is in an unfoamed state is fed to the sizing die.

In another particular aspect of the method for manufacturing a resin laminate according to the present invention, the method comprises a step of feeding the foamable resin composition and the non-foaming resin composition to a feed block to join and laminate the foamable resin composition and the non-foaming resin composition before the step of feeding into the mold for sheet molding to form the resin laminate.

In another particular aspect of the method for manufacturing a resin laminate according to the present invention, the method further comprises a step of releasing pressure in the sizing die to foam the foamable resin composition to form the foamed resin layer after the step of feeding the resin laminate in which the foamable resin composition is in an unfoamed state to the sizing die.

In still another particular aspect of the method for manufacturing a resin laminate according to the present invention, the method further comprises a step of cooling to a crystallization temperature of the resin composition forming a surface layer of the resin laminate in which the foamable resin composition is in an unfoamed state in the sizing die before the step of releasing pressure in the sizing die to foam the foamable resin composition to form the foamed resin layer.

In still another particular aspect of the method for manufacturing a resin laminate according to the present invention, the step of feeding the resin laminate in which the foamable resin composition is in an unfoamed state to the sizing die comprises a step of releasing pressure to foam the foamable resin composition to form a foamed resin layer in feeding the resin laminate in which the foamable resin composition is in an unfoamed state to the sizing die.

In still another particular aspect of the method for manufacturing a resin laminate according to the present invention, the above non-foamed resin layer is laminated on both surfaces of the above foamed resin layer.

In still another particular aspect of the method for manufacturing a resin laminate according to the present invention, in the step of feeding the foamable resin composition and the non-foaming resin composition to the feed block to join and laminate the foamable resin composition and the non-foaming resin composition, a resin for forming a gas barrier layer is further fed to the feed block so as to form the gas barrier layer between the foamed resin layer and the non-foamed resin layer in an obtained resin laminate, thereby joining and laminating the foamable resin composition, the non-foaming resin composition, and the resin for forming the gas barrier layer.

In still another particular aspect of the method for manufacturing a resin laminate according to the present invention, the resin for forming the above gas barrier layer is at least one selected from a group consisting of an ethylene-vinyl acetate copolymer, a norbornene resin, and a cycloolefin polymer.

An apparatus for manufacturing a resin laminate according to the present invention comprises a mold for sheet-molding a laminate formed by laminating a foamable resin composition in an unfoamed state in a molten state and a non-foaming resin composition for forming a non-foamed resin layer; and a sizing die disposed connected to a downstream side of the above mold.

In another particular aspect of the apparatus for manufacturing a resin laminate according to the present invention, the apparatus further comprises a feed block for joining and laminating the above foamable resin composition and the above non-foaming resin composition.

### Advantageous Effects of Invention

According to the method and apparatus for manufacturing a resin laminate according to the present invention, a foamable resin composition in an unfoamed state in a molten state and a non-foaming resin composition for forming a non-foamed resin layer are sheet-molded in a mold, and thus a resin laminate is formed. Then, the above resin laminate is fed to a sizing die with the above foamable resin composition in an unfoamed state or a foamed state. Therefore, significant simplification of the manufacturing process of a resin laminate in which a foamed resin layer and a non-foamed resin layer are laminated and the reduction in the manufacturing cost of the resin laminate can be promoted, and a resin laminate having good surface properties can be obtained.

### Brief Description of Drawings

[Figure 1] Figure 1 is a schematic front cross-sectional view of an apparatus for manufacturing a resin laminate according to the first embodiment of the present invention.
[Figure 2] Figure 2 is a photograph at 1x magnification of a resin laminate on which surface forming has not been performed by a sizing die.
[Figure 3] Figure 3 is a photograph at 1x magnification of a resin laminate on which surface forming has been performed by a sizing die.
[Figure 4] Figure 4 is a schematic front cross-sectional view of an apparatus for manufacturing a resin laminate according to the second embodiment of the present invention.
[Figure 5] Figure 5 is a cross-sectional view showing a resin laminate obtained by methods for manufacturing resin laminates according to the first and second embodiments of the present invention.
[Figure 6] Figure 6 is a schematic front cross-sectional view of an apparatus for manufacturing a resin laminate according to a modification of the first embodiment of the present invention.

### Description of Embodiments

The present invention will be clarified below by describing specific embodiments of the present invention.

In a method for manufacturing a resin laminate according to the present invention, a resin laminate formed by laminating a foamed resin layer and a non-foamed resin layer and having at least one foamed resin layer is manufactured.

### (First Embodiment)

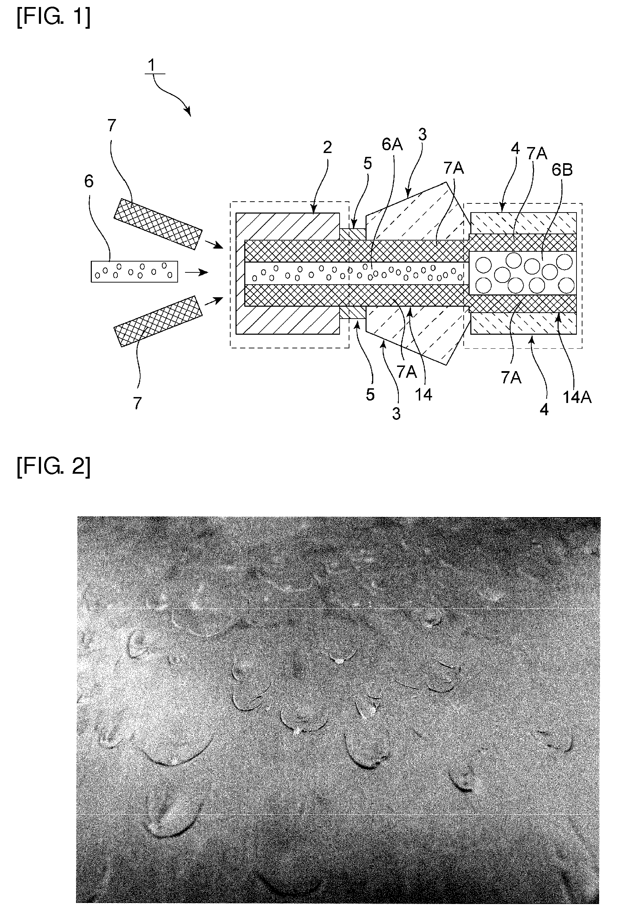

In a first embodiment according to the present invention, a method for manufacturing a resin laminate by a feed block method, and a manufacturing apparatus used in the manufacturing method will be described. Figure 1 is a schematic front cross-sectional view of an apparatus for manufacturing a resin laminate according to the first embodiment.

As shown in Figure 1, a manufacturing apparatus 1 in the first embodiment comprises a feed block 2, a mold 3 provided on the downstream side of the feed block 2, and a sizing die 4 disposed on the downstream side of the mold 3. The feed block 2 and the mold 3 are connected via a coupling portion 5. The downstream side is the right direction on the drawing and is the direction from the feed block 2 toward the coupling portion 5.

In this embodiment, the feed block 2 is provided in order to join and laminate a foamable resin composition 6 in an unfoamed state in a molten state and non-foaming resin compositions 7 and 7 for forming non-foamed resin layers 7A and 7A.

The method for feeding the foamable resin composition 6 and the non-foaming resin compositions 7 and 7 to the feed block 2 is not particularly limited. Examples of the method include a method of feeding the foamable resin composition 6 and the non-foaming resin compositions 7 and 7 by extruding each of them using an extruder.

The mold 3 is provided in order to sheet-mold the foamable resin composition 6 and the non-foaming resin compositions 7 and 7 joined and laminated in the feed block 2. Thus, a resin laminate 14 in which the foamable resin composition 6 is in an unfoamed state is formed. The mold 3 is not particularly limited, and a mold having a coat hanger type manifold can be used.

The sizing die 4 is composed of a mold through which water is circulated. The temperature of water circulated through the mold is preferably equal to or less than the crystallization temperature of the resin, more preferably 50°C or less, and further preferably 20°C. In this manner, in the sizing die 4, the resin laminate 14 in which the foamable resin composition 6 is in an unfoamed state and a resin laminate 14A obtained by foaming the foamable resin composition 6 can be cooled. Thus, the foam breakage of the foamed layer can be suppressed. In addition, as described later, the gas produced when the foamable resin composition 6 is foamed can be prevented from diffusing into the surface layers, and the surface of the obtained resin laminate 14A can be smoothed.

In addition, surface forming can be performed on the sheet-shaped unfoamed resin laminate 14 or resin laminate 14A by the sizing die 4. Also by performing surface forming, the surface of the resin laminate 14A can be smoothed.

Next, the manufacturing method in this embodiment using the manufacturing apparatus 1 will be more specifically described.

First, the foamable resin composition 6 in an unfoamed state in a molten state and the non-foaming resin compositions 7 and 7 for constituting the non-foamed resin layers 7A and 7A are fed to the feed block 2.

The foamable resin composition 6 and the non-foaming resin compositions 7 and 7 are previously heated and are in a molten state. The foamable resin composition 6 and the non-foaming resin compositions 7 and 7 are extruded from separate extruders not shown, respectively, and thereby fed to the feed block 2. The foamable resin composition 6 and the non-foaming resin compositions 7 and 7 flow in the feed block 2 from the resin composition feed ports of the feed block 2 not shown toward the coupling port 5 on the downstream side.

In this embodiment, the foamable resin composition 6 and the non-foaming resin compositions 7 and 7 are joined and laminated in the feed block 2.

Then, the joined and laminated foamable resin composition 6 and non-foaming resin compositions 7 and 7 reach the coupling port 5 on the downstream side and then pass through the coupling port 5 and are fed to the mold 3 on the further downstream side. In the mold 3, the foamable resin composition 6 and the non-foaming resin compositions 7 and 7 joined and laminated in the feed block 2 are sheet-molded. Thus, the resin laminate 14 in an unfoamed state comprising a foamable resin layer 6A and the non-foamed resin layers 7A and 7A is formed. The formed resin laminate 14 in an unfoamed state is extruded to the sizing die 4 on the further downstream side.

Then, in the sizing die 4, the foamable resin composition 6 in the foamable resin layer 6A foams by pressure release. Thus, a foamed resin layer 6B is formed, and the resin laminate 14A can be obtained. In the obtained resin laminate 14A, the non-foamed resin layers 7A and 7A are laminated on both surfaces of the foamed resin layer 6B. The above pressure release is performed by the outlet of the mold 3, that is, the inlet of the sizing die 4.

In addition, the bubbles grow by the above pressure release. Therefore, when the sizing die 4 is not used, the surface properties of the resin laminate worsen as in a photograph at 1x magnification shown in Figure 2.

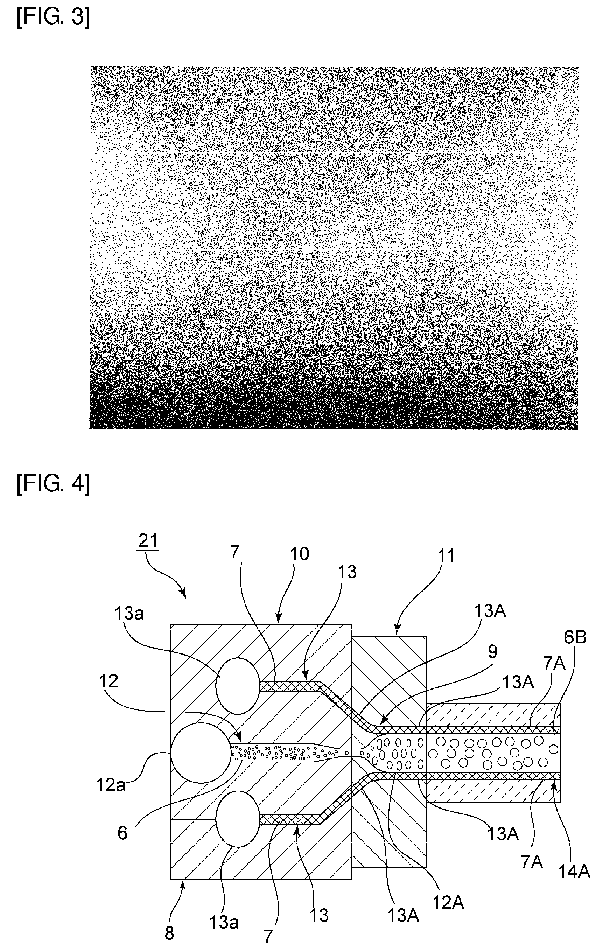

On the other hand, in the present invention, the sizing die 4 is provided, and therefore a resin laminate having a smooth surface as in a photograph at 1x magnification shown in Figure 3 can be obtained.

In this embodiment, as described above, when the resin laminate 14A in which the foamable resin composition 6 is in an unfoamed state is fed to the sizing die 4, the pressure is released to foam the foamable resin composition 6 to form the foamed resin layer 6B, and therefore the foamable resin composition 6 can be foamed while the non-foamed resin layers 7A and 7A that are surface layers are cooled. Therefore, the gas produced when the foamable resin composition 6 is foamed can be prevented from diffusing into the non-foamed resin layers 7A and 7A that are surface layers, and the surface of the obtained resin laminate 14A can be smoothed.

In addition, surface forming can be performed on the resin laminate 14 in which the foamable resin composition 6 is in an unfoamed state or the resin laminate 14A by the sizing die 4, and also by this, the surface of the obtained resin laminate 14A can be smoothed.

In this embodiment, as described above, the foamable resin composition 6 and the non-foaming resin compositions 7 and 7 are laminated in the feed block 4 and sheet-molded in the mold 3. Therefore, the non-foamed resin layers 7A and 7A are laminated before the surface of the foamable resin layer 6A is hardened by cooling. Thus, the resin laminate 14A can be efficiently obtained without providing a bonding material such as an adhesive or the like and further without carrying out an adhesion step.

In the present invention, when the resin compositions are fed to the feed block, a resin for forming a gas barrier layer may be further fed to the feed block so as to form the gas barrier layer between the foamed resin layer and the non-foamed resin layer in the obtained resin laminate. In this case, the foamable resin composition, the non-foaming resin composition, and the resin for forming the gas barrier layer are joined and laminated in the feed block.

By forming the gas barrier layer between the foamed resin layer and the non-foamed resin layer, the gas produced when the foamable resin composition is foamed can be effectively prevented from diffusing into the non-foamed resin layer side. For example, in the first embodiment, the gas can be prevented from diffusing into the sides of the non-foamed resin layers 7A and 7A that are surface layers, and therefore the surface of the obtained resin laminate 14A can be still further smoothed.

### (Modification of First Embodiment)

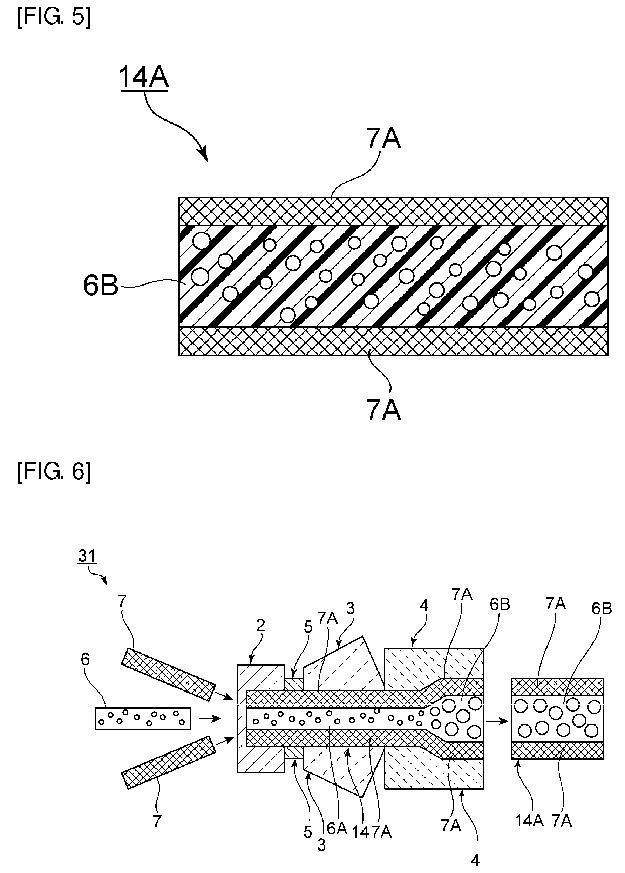

Figure 6 is a schematic front cross-sectional view of an apparatus for manufacturing a resin laminate according to a modification of the first embodiment of the present invention.

In the manufacturing apparatus 1 in the first embodiment, pressure release is performed at the inlet of the sizing die. On the other hand, in a manufacturing apparatus 31 according to the modification of the first embodiment, pressure release is performed in a sizing die 4 to foam a foamable resin composition 6 to form a foamed resin layer 6B. The manufacturing apparatus 31 is the same as the manufacturing apparatus 1 in the first embodiment in other respects.

A manufacturing method in this embodiment using the manufacturing apparatus 31 will be more specifically described below.

First, the foamable resin composition 6 in an unfoamed state in a molten state and non-foaming resin compositions 7 and 7 for constituting non-foamed resin layers 7A and 7A are fed to a feed block 2.

The foamable resin composition 6 and the non-foaming resin compositions 7 and 7 are previously heated and are in a molten state. The foamable resin composition 6 and the non-foaming resin compositions 7 and 7 are extruded from separate extruders not shown, respectively, and thereby fed to the feed block 2. The foamable resin composition 6 and the non-foaming resin compositions 7 and 7 flow in the feed block 2 from the resin composition feed ports of the feed block 2 not shown toward a coupling port 5 on the downstream side.

The foamable resin composition 6 and the non-foaming resin compositions 7 and 7 are joined and laminated in the feed block 2.

Then, the joined and laminated foamable resin composition 6 and non-foaming resin compositions 7 and 7 reach the coupling port 5 on the downstream side and then pass through the coupling port 5 and are fed to a mold 3 on the further downstream side. In the mold 3, the foamable resin composition 6 and the non-foaming resin compositions 7 and 7 joined and laminated in the feed block are sheet-molded. Thus, a resin laminate 14 in which the foamable resin composition 6 is unfoamed and which comprises a foamable resin layer 6A and the non-foamed resin layers 7A and 7A is formed. The formed unfoamed resin laminate 14 is extruded to the sizing die 4 on the further downstream side.

Then, in the sizing die 4, the foamable resin composition 6 in the foamable resin layer 6A foams by pressure release. Thus, a foamed resin layer 6B is formed, and a resin laminate 14A can be obtained. In the obtained resin laminate 14A, the non-foamed resin layers 7A and 7A are laminated on both surfaces of the foamed resin layer 6B.

In this manufacturing method, the above pressure release is performed in the sizing die 4. Particularly, it is desired that the resin laminate 14 is cooled to the crystallization temperature of the non-foamed resin layers 7A and 7A forming the outermost layers of the resin laminate 14A in which the foamable resin composition 6 is in an unfoamed state in the sizing die 4, and after the cooling, the pressure is released in the sizing die 4 to foam the foamable resin composition 6 to form the foamed resin layer 6B.

When the resin laminate 14 is cooled to the crystallization temperature of the resin constituting the non-foamed resin layers 7A and 7A and then the foamable resin composition 6 is foamed to form the foamed resin layer 6B in the sizing die 4 as described above, the gas produced when the foamable resin composition 6 is foamed can be effectively prevented from diffusing into the non-foamed resin layers 7A and 7A that are surface layers, and the surface of the obtained resin laminate 14A can be still further smoothed.

In addition, surface forming can be performed on the resin laminate 14 in which the foamable resin composition 6 is in an unfoamed state or the resin laminate 14A by the sizing die 4, and also by this, the surface of the obtained resin laminate 14A can be smoothed.

### (Second Embodiment)

In the first embodiment, the feed block method is used, but in the present invention, a multi-manifold method may be used as shown in a second embodiment.

Figure 4 shows an apparatus 21 for manufacturing a resin laminate according to the second embodiment. The manufacturing apparatus 21 according to the second embodiment comprises a multi-manifold mold 8 and a sizing die 4. The multi-manifold mold 8 has a multi-manifold portion 10 and a mold portion 11 provided on the downstream side of the multi-manifold portion 10. The multi-manifold portion 10 has a first manifold 12 and second manifolds 13 and 13 in this embodiment.

The first manifold 12 is provided in order to feed a foamable resin composition 6 in an unfoamed state in a molten state. The inlet side end 12a of the first manifold 12 is connected to a resin composition feed port not shown. The first manifold 12 is arranged to extend from the end 12a toward the downstream side. The downstream side is the right direction on the drawing and is the direction from the multi-manifold portion 10 toward the mold portion 11 side.

The second manifolds 13 and 13 are provided in order to feed non-foaming resin compositions 7 and 7 for constituting non-foamed resin layers 7A and 7A as surface layers, respectively. The end 13a of the second manifold 13 is connected to a resin composition feed port not shown. The non-foaming resin compositions 7 and 7 in a molten state are fed from the resin composition feed ports toward the end 13a and flow toward the downstream sides of the second manifolds 13 and 13.

The first manifold 12 and the second manifolds 13 and 13 each reach the mold portion 11. Portions in which the first manifold 12 and the second manifolds 13 and 13 reach the mold portion 11 are resin flow paths 12A, 13A, and 13A. In the mold portion 11, the resin flow path 12A and the resin flow paths 13A and 13A join in an internal space 9.

For the sizing die 4, a sizing die having a configuration similar to that of the sizing die used in the first embodiment can be used.

Next, a manufacturing method in this embodiment using the manufacturing apparatus 21 will be more specifically described.

First, the unfoamed foamable resin composition 6 in a molten state is fed to the first manifold 12. On the other hand, the non-foaming resin compositions 7 and 7 in a molten state for constituting the non-foamed resin layers 7A and 7A are fed to the second manifolds 13 and 13.

The foamable resin composition 6 and the non-foaming resin compositions 7 and 7 are previously heated and are in a molten state. The foamable resin composition 6 is fed from the end 12a of the first manifold 12 described above. The non-foaming resin compositions 7 and 7 are fed from the ends 13a and 13a of the second manifold 13 to the second manifolds 13 and 13.

The foamable resin composition 6 in an unfoamed state in a molten state advances through the first manifold 12 in the above-described flow direction. Similarly, the non-foaming resin compositions 7 and 7 advance in the second manifolds 13 and 13 in the above-described downstream direction.

Then, the foamable resin composition 6 advances from the multi-manifold portion 10 to the mold portion 11 side and reaches the resin flow path 12A in the mold portion 11. In this state, the foamable resin composition 6 foams by pressure release. Therefore, a foamed resin layer 6B is formed.

On the other hand, the non-foaming resin compositions 7 and 7 in a molten state that have advanced through the second manifolds 13 and 13 reach the resin flow paths 13A and 13A and are laminated on the above-described foamed resin layer 6B.

Then, the resin laminate in which the foamed resin layer 6B and the non-foamed resin layers 7A and 7A are laminated further advances to the downstream side and reaches the sizing die 4. In the sizing die 4, surface forming is performed as in the first embodiment.

Also in the second embodiment, in this manner, in one multi-manifold mold 8, that is, in the mold portion 11, the foamed resin layer 6B and the non-foamed resin layers 7A and 7A are joined and laminated and further sheet-molded. Therefore, the non-foamed resin layers 7A and 7A are laminated before the surface of the foamed resin layer 6B is cured by cooling. Thus, a resin laminate 14A can be efficiently obtained without providing a bonding material such as an adhesive or the like and further without carrying out an adhesion step. Also in this embodiment, surface forming is performed on the obtained resin laminate in the sizing die 4, and therefore the resin laminate 14A having good surface properties can be obtained. In this manner, the resin laminate 14A shown in Figure 5 is obtained. In the obtained resin laminate 14A, the non-foamed resin layers 7A and 7A are laminated on both surfaces of the foamed resin layer 6B.

Also in the second embodiment, a resin for forming a gas barrier layer may be further fed using another manifold so as to form the gas barrier layer between the foamed resin layer 6B and the non-foamed resin layers 7A and 7A. In this case, the foamable resin composition 6, the non-foaming resin compositions 7 and 7, and the resin for forming the gas barrier layer are joined and laminated in the mold portion 11.

In this case, the gas can be prevented from diffusing into the sides of the non-foamed resin layers 7A and 7A that are surface layers, and therefore the surface of the obtained resin laminate 14A can be still further smoothed.

According to the manufacturing methods in the first and second embodiments and the manufacturing method in the modification of the first embodiment, the resin laminate 14A in which the non-foamed resin layers 7A and 7A are laminated on both surfaces of the foamed resin layer 6B can be efficiently obtained. In the resin laminate 14A, weight reduction can be promoted by the foamed resin layer 6B. In addition, stress relaxation properties can be developed. On the other hand, the mechanical strength can be enhanced and the surface smoothness can be enhanced by the non-foamed resin layers 7A and 7A. Further, according to the present invention, the surface is smoothed by the sizing die 4. Thus, a resin laminate having a smooth surface and having both the advantages of a foamed resin layer and a non-foamed resin layer can be inexpensively and efficiently provided.

In addition, in the first and second manufacturing methods and the manufacturing method in the modification of the first embodiment described above, the resin laminate 14A having a three-layer structure shown in Figure 5 is obtained. Therefore, the non-foamed resin layers 7A and 7A are laminated on both surfaces of one foamed resin layer 6B. However, in the present invention, two or more foamed resin layers may be formed. In addition, only one non-foamed resin layer may be formed, or three or more non-foamed resin layers may be formed. Therefore, for example, a resin laminate in which the non-foamed resin layer 7A is laminated only on one surface of the foamed resin layer 6B may be formed.

Next, the materials used in the method for manufacturing a resin laminate according to the present invention will be described.

### (Foamable Resin Composition)

As the foamable resin composition used in the present invention, a foamable resin composition comprising a thermoplastic resin and a foaming agent can be used.

The thermoplastic resin is not particularly limited. Examples of the thermoplastic resin can include polyolefins such as polyethylene and polypropylene, polystyrene, and polyurethanes. Among them, polypropylene-based resins are preferably used because they are widely used in various resin molded bodies and are inexpensive.

As the above foaming agent, conventionally used appropriate foaming agents can be used. Examples of such foaming agents include chemical foaming agents and physical foaming agents. From the viewpoint of still further enhancing foaming efficiency, chemical foaming agents are preferred. From the viewpoint of the environmental load and the cost at which inexpensive manufacture is possible, physical foaming agents are preferred. Only one foaming agent may be used, or two or more foaming agents may be used in combination.

As the above chemical foaming agents, inorganic chemical foaming agents and organic chemical foaming agents can be used. Examples of the above inorganic chemical foaming agents include sodium hydrogen carbonate and ammonium carbonate. Examples of the above organic chemical foaming agents include nitroso compounds, azo compounds, and sulfonyl hydrazide compounds. Examples of the above azo compounds include azodicarbonamide. From the viewpoint of still further enhancing foaming efficiency, sodium hydrogen carbonate is preferred.

The above physical foaming agent as a gaseous or supercritical fluid is injected into the molten resin from the cylinder or screw of a molding machine, dispersed, and dissolved. Then, the foamable resin composition is flowed into the mold and then can be foamed by releasing the pressure. Specific examples of the above physical foaming agents include aliphatic hydrocarbons, alicyclic hydrocarbons, and inorganic gases. Examples of the above aliphatic hydrocarbons include butane. Examples of the above alicyclic hydrocarbons include cyclobutane. Examples of the above inorganic gases include nitrogen, carbonic acid gas, and air.

However, in the present invention, not only physical foaming agents such as nitrogen and carbonic acid gas but other foaming agents, azo compounds and the like, may be used.

The content of the above foaming agent may be appropriately selected according to the physical properties of the foamed resin layer in which the foaming agent is to be dissolved. Usually, about 3 to 10 parts by weight of the foaming agent may be contained based on 100 parts by weight of the thermoplastic resin. For a physical foaming agent such as carbonic acid gas, the amount of the gas corresponding to the target expansion ratio may be enclosed.

When the foamable resin composition in an unfoamed state in a molten state is fed to the mold, the above foamable resin composition may be heated to a temperature at which the above foamable resin composition is melted. In other words, the above foamable resin composition may be heated to a temperature equal to or more than the melting point of the above thermoplastic resin. The melting point of the thermoplastic resin refers to the temperature of the melting peak obtained by DSC.

### (Non-Foaming Resin Composition)

The non-foaming resin composition is a composition for constituting the non-foamed resin layer. As this non-foaming resin composition, a resin composition comprising a thermoplastic resin and appropriate additives can be used.

Examples of the thermoplastic resin used in the above non-foaming resin composition can include polyolefins such as polyethylene and polypropylene and ABS resins. Among them, thermoplastic resins having higher mechanical strength than that of the thermoplastic resin constituting the foamed resin layer are desirably used in order that the mechanical strength of the resin laminate can be effectively enhanced.

In the above non-foaming resin composition, an appropriate filler such as an inorganic filler or the like may be added to the above thermoplastic resin to adjust external strength.

As the inorganic filler, a carbon material having a graphene structure can be preferably used. When the carbon material having a graphene structure is used, the diffusion of the gas into the non-foamed resin layer can be effectively prevented.

The above carbon material having a graphene structure is not particularly limited, but preferably, at least one selected from the group consisting of graphite, carbon nanotubes, exfoliated graphite, and graphene can be used. More preferably, as the above carbon material, a laminate of a plurality of graphene sheets, that is, exfoliated graphite, is used. In the present invention, the exfoliated graphite is obtained by subjecting the original graphite to exfoliation treatment, and refers to a graphene sheet laminate thinner than the original graphite. The number of laminated graphene sheets in the exfoliated graphite may be smaller than that in the original graphite and is usually about several to 200.

Further, as other additives, an ultraviolet absorbing agent, EPDM for providing flexibility, an antioxidant, and the like may be added.

### (Resin for Forming Gas Barrier Layer)

As described above, in the present invention, a resin for forming a gas barrier layer may be further fed to the feed block so as to form the gas barrier layer between the foamed resin layer and the non-foamed resin layer in the obtained resin laminate.

The resin for forming the gas barrier layer is not particularly limited, but from the viewpoint of effectively preventing the diffusion of the gas into the non-foamed resin layer, at least one selected from the group consisting of an ethylene-vinyl acetate copolymer (EVA), a norbornene resin, and a cycloolefin polymer (COP) can be preferably used.

### Reference Signs List

- 1, 21, 31 ...: a manufacturing apparatus
- 2 ...: a feed block
- 3 ...: a mold
- 4 ...: a sizing die
- 5 ...: a coupling portion
- 6 ...: a foamable resin composition
- 6A ...: a foamable resin layer
- 6B ...: a foamed resin layer
- 7 ...: a non-foaming resin composition
- 7A ...: a non-foamed resin layer
- 8 ...: a multi-manifold mold
- 9 ...: an internal space
- 10 ...: a multi-manifold portion
- 11 ...: a mold portion
- 12 ...: a first manifold
- 12a ...: an end of the first manifold
- 13 ...: a second manifold
- 13a ...: an end of the second manifold
- 12A, 13A ...: a resin path
- 14 ...: a resin laminate in an unfoamed state
- 14A ...: a resin laminate

## Claims

1. A method for manufacturing a resin laminate formed by laminating a foamed resin layer and a non-foamed resin layer and having at least one foamed resin layer, comprising the steps of:
feeding a foamable resin composition in an unfoamed state in a molten state and a non-foaming resin composition for forming the non-foamed resin layer into a mold for sheet molding to form a resin laminate; and
feeding the resin laminate in which the foamable resin composition is in an unfoamed state or a foamed state to a sizing die.

2. The method for manufacturing a resin laminate according to claim 1, wherein in the step of feeding into the mold for sheet molding to form the resin laminate, the resin laminate in which the foamable resin composition is in an unfoamed state is formed, and
in the step of feeding to the sizing die, the resin laminate in which the foamable resin composition is in an unfoamed state is fed to the sizing die.

3. The method for manufacturing a resin laminate according to claim 1 or 2, comprising a step of feeding the foamable resin composition and the non-foaming resin composition to a feed block to join and laminate the foamable resin composition and the non-foaming resin composition before the step of feeding into the mold for sheet molding to form the resin laminate.

4. The method for manufacturing a resin laminate according to claim 2 or 3, further comprising a step of releasing pressure in the sizing die to foam the foamable resin composition to form the foamed resin layer
after the step of feeding the resin laminate in which the foamable resin composition is in an unfoamed state to the sizing die.

5. The method for manufacturing a resin laminate according to claim 4, further comprising a step of cooling to a crystallization temperature of the resin composition forming a surface layer of the resin laminate in which the foamable resin composition is in an unfoamed state in the sizing die
before the step of releasing pressure in the sizing die to foam the foamable resin composition to form the foamed resin layer.

6. The method for manufacturing a resin laminate according to claim 2 or 3, wherein the step of feeding the resin laminate in which the foamable resin composition is in an unfoamed state to the sizing die comprises
a step of releasing pressure to foam the foamable resin composition to form the foamed resin layer in feeding the resin laminate in which the foamable resin composition is in an unfoamed state to the sizing die.

7. The method for manufacturing a resin laminate according to any one of claims 1 to 6, wherein the non-foamed resin layer is laminated on both surfaces of the foamed resin layer.

8. The method for manufacturing a resin laminate according to any one of claims 3 to 7, wherein in the step of feeding the foamable resin composition and the non-foaming resin composition to the feed block to join and laminate the foamable resin composition and the non-foaming resin composition,
a resin for forming a gas barrier layer is further fed to the feed block so as to form the gas barrier layer between the foamed resin layer and the non-foamed resin layer in an obtained resin laminate, thereby joining and laminating the foamable resin composition, the non-foaming resin composition, and the resin for forming the gas barrier layer.

9. The method for manufacturing a resin laminate according to claim 8, wherein the resin for forming a gas barrier layer is at least one selected from a group consisting of an ethylene-vinyl acetate copolymer, a norbornene resin, and a cycloolefin polymer.

10. An apparatus for manufacturing a resin laminate, comprising:
a mold for sheet-molding a laminate formed by laminating a foamable resin composition in an unfoamed state in a molten state and a non-foaming resin composition for forming a non-foamed resin layer; and
a sizing die disposed connected to a downstream side of the mold.

11. The apparatus for manufacturing a resin laminate according to claim 10, further comprising a feed block for joining and laminating the foamable resin composition and the non-foaming resin composition.
